Europäisches Patentamt

European Patent Office

Office européen des brevets

(11) Veröffentlichungsnummer: **0 095 016**
**A1**

# (12) EUROPÄISCHE PATENTANMELDUNG

(21) Anmeldenummer: 83101967.4

(22) Anmeldetag: 01.03.83

(51) Int. Cl.³: **A 01 K 47/00**

(30) Priorität: 02.03.82 DE 3207449

(43) Veröffentlichungstag der Anmeldung:
30.11.83 Patentblatt 83/48

(43) Anmeldung bereits am 14.09.83
veröffentlicht unter Nr. 0088333.
Diese Veröffentlichung wurde am
19.10.83 widerrufen.

(84) Benannte Vertragsstaaten:
AT BE CH FR GB IT LI LU NL SE

(71) Anmelder: G + W Schreib- u. Übersetzungsbüro GbmH
Greflinger Strasse 7
D-8400 Regensburg(DE)

(72) Erfinder: Schmidt, Matthias
Dachsbaustrasse 9
D-6950 Mosbach-Waldstadt(DE)

(74) Vertreter: Wasmeier, Alfons, Dipl.-Ing.
Postfach 382
D-8400 Regensburg 1(DE)

(54) Verfahren zum Erhöhen der Widerstandsfähigkeit von Bienen gegen Krankheiten, insbesondere die Varroa-Milbe, sowie Vorrichtung zur Durchführung des Verfahrens.

(57) Um Bienenkrankheiten, wie die Varroa-Milbe, erfolgreich zu bekämpfen, werden kräftigere, widerstandsfähigere Bienen gezüchtet, indem von krätigen, gesunden Bienenvölkern ausgegangen wird, die Bienen besser ernährt und größer gezüchtet werden und die Schwarmneigung auf natürliche Weise dadurch unterbunden wird, daß mindestens ein Teil eines Bienenvolkes als Kunstschwarm entfernt wird. Auf besonders rationelle Weise geschieht dies dadurch, daß mehrere Bienenkästen in Reihe zu einer Einheit zusammengeschlossen werden, daß nur einer der Bienenkästen geleert bzw. behandelt wird, und daß ein Teil der Bienen aus den anderen Kästen von selbst in den geleerten Kasten wandern und diesen wieder auffüllen. Es werden Mittel angegeben, um diese Methode auf einfache, arbeitssparende Weise durchzuführen.

Fig. 12

EP 0 095 016 A1

Croydon Printing Company Ltd.

Verfahren zum Erhöhen der Widerstandfähigkeit von Bienen 0095016
gegen Krankheiten, insbesondere die Varroa-Milbe, sowie
Vorrichtung zur Durchführung des Verfahrens

Die Erfindung bezieht sich auf ein Verfahren und eine Vorrichtung, um Bienenvölker auf biologischem Wege widerstandsfähiger gegen Bienenkrankheiten zu machen.

Bienenvölker sind in zunehmendem Maße durch Bienenkrankheiten gefährdet und der Bestand an Bienenvölkern ist insbesondere durch die zunehmende Verbreitung der Varroa-Milbe erheblich in Gefahr. Krankheiten allgemein, und insbesondere der Befall durch die Varroa-Milbe wurden bisher ausschließlich auf chemischen Wege bekämpft. Einerseits wird durch den Einsatz von chemischen Mitteln der Naturhaushalt und das ökologische Gleichgewicht bei den Bienenvölkern in Mitleidenschaft gezogen, so daß eine derartige Krankheitsbekämpfung äußerst gefährlich ist; andererseits ist das Produkt, das von den Bienenvölkern erzeugt wird, und deretwegen die Bienen maßgeblich gehalten werden, nämlich der Honig, durch diese chemische Krankheitsbekämpfung mindestens in gleicher Weise "vergiftet" wie gespritztes Obst und Gemüse, was gerade bei Honig wegen seiner Bedeutung als naturreines und gesundes Nahrungsmittel abzulehnen ist. Darüber hinaus wird durch Verwendung chemischer Abwehr- und Vernichtungsstoffe im Laufe der Zeit bei den Krankheitserregern, z.B. der Varroa-Milbe, eine zunehmende Resistenz und Immunität dieser Krankheitserreger festgestellt, so daß die Dosierung der verwendeten chemischen Mittel verstärkt werden muß oder grundsätzlich härtere Mittel eingesetzt werden müssen, was zu einem gefährlichen Kreislauf führt.

Der Einsatz von chemischen Mitteln zur Krankheitsbekämpfung bei Bienenvölkern hat weiterhin zur Folge, daß die schwachen Bienenvölker ebenso wie die starken fortgepflanzt werden, was der natürlichen Auslese im Tierreich zuwiderläuft. Die Forschungsarbeiten des Erfinders haben gezeigt, daß die Tendenz, gerade schwache Bienenvölker fortzupflanzen, weil die schwächeren Völker nicht oder erheblich weniger als die starken Völker schwärmen, zu einer vermehrten Anfälligkeit der Bienen gegen Krankheiten führt, aber auch deren Leistungsfähigkeit beeinflußt, und daß nur ein Weg dazu führt, diese Krankheiten erfolgreich zu bekämpfen, bzw. ihnen zu begegnen, nämlich starke Bienenvölker zu entwickeln, die aufgrund ihrer Robustheit und Widerstandsfähigkeit in der Lage sind, mit den sie bedrohenden Krankheiten selbst fertig zu werden und in ausreichendem Maße Abwehrstoffe zu bilden. Weiter hat der Erfinder erkannt, daß der Schwarmtrieb der Bienen keine direkte Erbanlage, sondern die Folge der Futtersafterzeugung ist. Bienenvölker mit stark ausgeprägter Futtersafterzeugung schwärmen mehr als Bienenvölker mit schwacher Futtersafterzeugung. Damit ein Bienenvolk öfters schwärmen kann und normal starke Schwärme abgegeben werden, müssen ausreichend viele Bienen vorhanden sein. Durch langjährige Versuche des Erfinders hat sich herausgestellt, daß bei Bienenvölkern mit stark ausgeprägter Futtersafterzeugung die Bienen länger leben, weil sie als Jungmaden besser ernährt werden, daß diese Bienen mehr leisten können, daß diese Bienen widerstandsfähiger gegen Krankheiten sind, und daß die Bienenköniginnen, die von solchen Völkern aufgezogen und gepflegt werden, bedeutend mehr als andere Bienenköniginnen leisten. Umgekehrt hat sich gezeigt, daß bei schwacher Futtersafterzeugung keine Überzahl an Bienen erzeugt werden kann; die Bienen haben eine kürzere Lebensdauer und sind anfälliger für Krankheiten. Derartige Bienenvölker schwärmen auch selten oder gar nicht. Diese letztere Eigenschaft ist von Hobbyimkern zur Erzielung schwarmträger Bienenvölker ausgenützt worden, da sich dadurch vermeintlich die Arbeit mit den Bienenvölkern einfacher gestaltet.

Wie voranstehend ausgeführt, ist ein Bienenvolk, dessen Jungmaden besser ernährt werden, leistungsfähiger und wider- standsfähiger gegen Krankheiten. Diese Erkenntnis hat dazu geführt, daß der Erfinder Kunststoffwaben vorgeschlagen hat (P 25 39 494.9), die mit einem größeren Zellendurchmesser ausgestattet waren, um zu erreichen, daß aufgrund des größeren Platzangebotes die Jungmaden sich größer und kräftiger entwickeln konnten. Langjährige Versuche haben ergeben, daß dieser gewünschte Effekt tatsächlich eintritt. Daß eine derartige Wabe sich jedoch in der Praxis bisher nicht in vollem Umfang bewährt hat, ist maßgeblich darauf zurückzuführen, daß die Bienen eine derartige Wabe nicht voll als Arbeitswabe akzeptieren und daß zwischen den Arbeiterbrutzellen Drohnenbrutzellen, die bekanntlich einen größeren Durchmesser als die Zellen der Arbeiterbrut haben, besetzt wurden, so daß eine den natürlichen Verhältnissen widersprechende Mischbrut entsteht. Die Vergrößerung der Zellendurchmesser derartiger Waben und die damit erreichbare Vergrößerung der Dimensionen der Jungmaden bzw. sich daraus ergebender kräftigerer und widerstandsfähigerer Bienen war von dem Erfinder unter dem Gesichtspunkt gewählt worden , daß kräftigere Bienen einen größeren Honigertrag ergeben. Im Hinblick auf die eben genannten Schwierigkeiten hat sich dies jedoch wegen der in diesen Waben entstehende Mischbrut nicht in befriedigender Weise erreichen lassen.

Hingegen haben diese Forschungsarbeiten wie auch andere theoretische und praktische Arbeiten an Kunststoffbienenwaben mit normalem Zellendurchmesser (die beiden verschiedenen Gattungen von Kunststoffwaben haben jeweils eine Kunststoffzellenwandhöhe von etwa 1/3 der vollen Zellenwandhöhe, so daß die Bienen 2/3 der Gesamthöhe mit Wachs aufbauen) ergeben, daß der Futtersaft in Kunststoffwaben wesentlich besser erhalten bleibt als in Wachswaben, so daß Jungmaden in Kunststoffwaben besser ernährt werden und demzufolge sich auch kräftiger und widerstandsfähiger entwickeln. Die Gründe für dieses Phänomen sind bisher nicht restlos geklärt, es wird jedoch vermutet, daß aufgrund der elektrostatischen Ladungen in Kunststoffwaben sich der Futtersaft wesentlich weniger rasch verflüchtigt als dies

bei Wachswaben der Fall ist.

Kunststoffwaben der vorstehend angegebenen Art wurden vom
Erfinder mit einer verringerten Zellenwandhöhe ausgeführt, um
einerseits den Bienen die Möglichkeit zu geben, das körpereige
gene Wachs beim Aufbauen der fehlenden Zellenwandhöhe abzugeben
und damit dem Trieb der Bienen, das körpereigene Wachs zum
Aufbau der Zellen zu verwenden, zu entsprechen, andererseits,
um Kunststoffzellen dieser Art überhaupt technisch in halbwegs
vernünftiger Weise herstellen zu können, da die Herstellung von
Kunststoffzellen mit voller Zellenwandhöhe im Spritzgußverfahren vom maschinellen Standpunkt aus ohne zusätzliche Maßnahmen
nicht möglich war. Solche zusätzlichen Maßnahmen wurden bei
einer vom Erfinder geschaffenen Kunststoffwabe mit voller
Zellenwandhöhe aus Kunststoff geschaffen, indem jede Zellenwand
mit Schlitzen versehen wurde, die zum einen Reinigungszwecken
dienen und die zum anderen die Herstellung der Waben mit voller
Zellenwandhöhe möglich machen.

Es ist weiterhin ein Vorschlag des Erfinders bekannt (P 29 35
934.0) der eine Bienengroßeinheit mit mehreren voneinander
getrennten Königinnen zum Gegenstand hat, wobei die Bienengroßeinheit auf mehrere Abteile mit je einer Königin verteilt
ist, die Bienen der einzelnen Abteile durch einen allen
Abteilen gemeinsamen Sammelraum miteinander in Verbindung
gebracht werden, die Fütterung der Bienen über diesen Sammelraum in einem für alle Bienen gemeinsamen Futterraum vorgenommen wird, und nur eines der Abteile für die Behandlung der
Bienen ausgewählt wird. Mit diesem Vorschlag wird eine einfache
und wirtschaftliche Methode geschaffen, um mehrere Bienenvölker
konzentrisch innerhalb einer Bienengroßeinheit unterzubringen
und dabei innerhalb der gesamten Großeinheit die an Bienenvölkern anfallenden Arbeiten nur an einem einzigen Abteil durchzuführen. Diese Methode hat neben den unbestreitbaren Vorteilen
hoher Wirtschaftlichkeit jedoch den Nachteil, daß derartige
Bienengroßeinheiten wegen ihrer Größe nicht in Bienenhäusern

5

untergebracht werden können, daß sie relativ unhandlich und damit nicht transportabel sind, daß sie aufgrund der rundum angeordneten Fluglöcher nicht mit einer oder mit zwei Seiten an eine Wand oder an eine steile Böschung gestellt werden können, und daß der Aufwand bei der Anschaffung groß ist. Eine derartige Bienengroßeinheit wurde konzipiert, um Bienenzucht und Honiggewinn wesentlich rationeller durchführen zu können als bisher, und um das Schwärmen der Bienen mit relativ geringem Arbeitsaufwand verhindern zu können.

Aufgabe vorliegender Erfindung ist es, ein Verfahren und eine Vorrichtung zu schaffen, um die Konstitution von Bienen bzw. Bienenvölker zu erhöhen, insbesondere sie so zu stärken, daß sie gegen Krankheiten widerstandsfähiger sind.

Gemäß der Erfindung wird dies mit einem Verfahren mit den kennzeichnenden Merkmalen des Anspruches 1 sowie mit einer Vorrichtung mit den kennzeichnenden Merkmalen des Anspruches 9 bzw. 10 erreicht. Weitere Merkmale der Erfindung sind Gegenstand der Unteransprüche.

Bei dem erfindungsgemäßen Vorschlag wird davon ausgegangen, daß eine wirksame Bekämpfung der meisten Bienenkrankheiten dadurch erreicht wird, daß kräftige und widerstandsfähige Bienenvölker weit besser in der Lage sind, derartigen Krankheiten zu widerstehen, kräftigere und widerstandsfähigere Bienen werden nach vorliegender Erfindung dadurch gezogen, daß einerseits von besonders kräftigen und gesunden Völkern ausgegangen wird, daß andererseits diese Bienen besonders gut ernährt werden und die Möglichkeit erhalten, sich zusätzlich zu der guten Ernährung auch besser und größer zu entwickeln, und daß die durch eine bessere Ernährung der Bienen auftretende erhöhte Schwarmneigung auf natürliche Weise dadurch unterbunden wird, daß vor Beginn des Schwärmens ein Teil der Bienen unterbunden wird. Die bessere Ernährung der Bienen wird maßgeblich durch die Verwendung von Kunststoffwaben erreicht, da der für die Ernährung der

6

Maden und damit für die Erzielung kräftigerer und widerstandsfähigerer Bienen erforderliche Futtersaft in Kunststoffwaben
viel besser erhalten bleibt als in herkömmlichen Wachswaben,
wobei Versuche eindeutig ergeben haben, daß die Futtersafterhaltung umso besser wird, je mehr Kunststoff an den Waben
vorhanden ist. Die mit vorliegender Erfindung vorgeschlagenen
Kunststoffwaben besitzen deshalb eine Zellenwandhöhe von etwa
3/4 der natürlichen Zellenwandhöhe, d.h. etwa 9 mm. Damit
erhalten die Bienen auch die Möglichkeit, bis zur vollen
Zellenwandhöhe mit körpereigenem Wachs aufzubauen, was für die
Bienen notwendig ist. Des weiteren erhalten bei einer derartigen relativ großen Höhe der Zellwände aus Kunststoff die
Kunststoffwaben eine ausgezeichnete Stabilität, so daß auf jede
Art von Rahmen der Kunststoffwaben verzichtet werden kann.

Zur Durchführung des erfindungsgemäßen Verfahrens ist es
erforderlich, Kunststoffwaben mit verschieden großem Zellendurchmesser zum Einsatz zu bringen. Dies bedeutet, daß zu
Beginn der Züchtung besonders widerstandsfähiger Bienenvölker
die Bienenkästen mit Kunststoffwaben der vorstehend angegebenen
Art mit normalem Zellendurchmesser besetzt werden, und daß nach
einem längeren Zeitraum besonders guter Ernährung der Bienen,
z.B. einem oder mehreren Jahren, eine entsprechende Kunststoffwabe mit etwas größerem Zellendurchmesser (Unterschied ca. 5%)
etwa über den gleichen Zeitraum hinweg verwendet wird, und
dieser Vorgang mehrmals wiederholt wird, so daß am Schluß des
Züchtungsvorganges Kunststoffwaben mit einem Zellendurchmesser
von ca. 6,3 mm verwendet werden, die mit Maden bzw. Bienen
besetzt sind, die erheblich größere körperliche Abmessungen als
die Bienen zu Beginn des Züchtungsvorganges haben, und die
demgemäß widerstandsfähiger und auch leistungsfähiger sind als
herkömmliche, auf Waben mit normalem Durchmesser gezogene
Bienen.

Dies gilt gemäß der Erfindung auch für Drohnen, die in Drohnenwaben aus Kunststoff mit einem Zellendurchmesser von ca. 6,8

6a

bis 7,2 mm gezogen werden. Drohnen sind gegenüber der Varroa-Milbe besonders gefährdet, so daß leistungsfähigere und widerstandsfähigere Drohnen ihre Aufgabe wesentlich besser erfüllen und gegenüber Krankheiten wesentlich widerstandsfähiger sind als in herkömmlicher Weise gezogene Bienen. In diesem Zusammenhang sei auch auf weitere Erkenntnisse des Erfinders hingewiesen, wonach drei Qualitäten an Futtersaft existieren, näm-

- 7 -

lich die beste Qualität an Futtersaft der Königin verabreicht
wird, die zweite Qualität zur Fütterung der Arbeiterbrut dient
und die dritte, d.h. die minderere Qualität, zur Fütterung der
Drohnenbrut dient, so daß die Drohnen aufgrund dieser schlechteren Ernährung zwangsweise gegen Krankheiten am anfälligsten
sind.

Die Varroa-Milben legen ihre Eier in die Wabenzellen, in denen
sich bereits Brut befindet; sie fressen den für die Aufzucht
der Maden bestimmten Futtersaft, der nur in begrenztem Maße zur
Verfügung steht, greifen aber insbes. die Maden direkt an und
schwächen sie. Wenn im Herbst die Bienenvölker zu brüten aufhören, also keine Brut mehr vorhanden ist, ist es möglich, die
Bienen auf chemischem Wege gegen Varroa-Milben zu behandeln. Die
Brut selbst kann, da die Maden besonders empfindlich sind, mit
chemischen Mitteln nicht behandelt werden. Dieses Vorgehen stellt
eine begrenzte Möglichkeit der Bekämpfung der Varroa-Milben als
Übergangsstadium dar, bis die Züchtung von Königinnen soweit fortgeschritten ist, daß Königinnen mit besonders guten Erbanlagen
aus einer umfangreichen Königinnenzucht ausgewählt werden können.

Wichtig für die Durchführung des Verfahre: nach der Erfindung
und für die Erzielung hierfür geeigneter Vorrichtungen ist eine
optimale Wärmeisolierung und ein großes Volumen der Bruträume.
Dies ermöglicht, frühzeitig im Jahr Kunstschwärme zu bilden,
weil kräftige und widerstandsfähige Bienenvölker zur Verfügung
stehen. Während natürliche Schwärme von den Bienenvölkern selbst
gebildet werden, entstehen die sogenannten "Kunstschwärme" durch
Menschenhand. Es handelt sich hierbei um nackte Bienen, d.h.
Bienen ohne Brut.

Die einzelnen Bienenkästen, deren Außenwände isoliert sind,
werden nebeneinander angeordnet und miteinander so verbunden,
daß eine ununterbrochene Reihe von aneinander anschließenden
Kästen entsteht. Diese in einer Reihe nebeneinander angeordneten Bienenkästen sind miteinander über indirekte Verbindungen
in U-Form verbunden,die in den Trennwänden jeweils zweier aneinander stoßender Kästen ausgebildet sind. Dabei ist die eine Hälfte dieser Verbindung in der Seitenwand des einen Kastens und die andere Hälfte dieser Verbindung in der zugewandten Seitenwand des benachbarten Kastens ausgebildet, und es sind von außen betätigbare Schieber oder dgl. Sperrvorrichtungen an der Stelle vorgesehen, an der die Verbindungshälften aufeinandertreffen, damit z.B. zum Transport die Bienenkästen einzeln verschlossen werden können, nach Bedarf der Übergang der Bienen von einem Kasten zum benachbarten unterbunden werden kann oder dgl. Es sind an sich bekannte Vorkehrungen, z.B. in Form von Sperren, getroffen, damit die Bienenköniginnen über diesen Verbindungsweg nicht von einem Bienenkasten in einen anderen gelangen können. Der besondere Vorteil einer derartigen Anordnung im Hinblick auf den Arbeitsaufwand und das Betriebsergebnis besteht darin, daß bei einer Vielzahl von Bienenkästen in Reihe nur jeweils jeder zweite, fünfte, achte usw. Kasten behandelt bzw. bearbeitet werden muß, während die übrigen Kästen 1, 3, 4, 6, 7, 9 usw. ohne Behandlung bleiben können, was für den Imker eine erhebliche Zeitersparnis bedeutet. Die Fütterung erfolgt dabei in jedem Bienenkasten gesondert.

Bei den Umwegkanälen bekannter Art liegen Zugangs- und Abgangsöffnungen zweier benachbarter Wände zweier aneinander anschließender Bienenkästen im oberen Bereich und die Übergangsöffnungen der beiden benachbarten Wände im unteren Bereich. Der Übergang im unteren Bereich wird durch einen von außen zwischen den beiden einander zugewandten Wänden zweier aneinander anschließender Kästen oder in eine Aussparung einer der Wände eingeschoben. Da der obere Bereich der wärmere Bereich und der untere Bereich der kältere Bereich ist, bewirkt eine derartige Anordnung, daß die Bienen sich dagegen wehren, dem Pfad des Umwegkanales zu folgen, da sie ihren Weg aus dem wärmeren Bereich in den kälteren Bereich nach abwärts nehmen müßten, so daß insbesondere junge und deshalb empfindliche Bienen nicht über den Umwegkanal in den benachbarten Kasten wandern. Dies hat aber zur Folge, daß die Methode nach der Erfindung praktisch nicht durchführbar ist, weil die Bienen den Weg in den kälteren Abschnitt nicht nehmen. Weiterhin hat das Einführen eines Schiebers von der Seite zum Sperren des Überganges von einem Kasten in den benachbarten den wesentlichen Nachteil, daß über diese seitlichen Öffnungen dauernd Kaltluft in den Umwegkanal gelangt und damit den Wärmehaushalt in den beiden benachbarten Kästen empfindlich stört. Gemäß der Erfindung wird deshalb vorgeschlagen, den U-förmigen Übergang, der in den einander zugewandten Wänden zweier aneinander anschließender Kästen ausgebildet ist, so zu gestalten, daß Eingang und Ausgang im unteren, kälteren Bereich liegen und die Übergangsschleife im oberen, wärmeren Bereich liegen, so daß die Bienen den Pfad nach oben zur Stelle höherer Temperatur gerne wählen und den Übergang benutzen, und damit der durch Entnahme eines Kunstschwarmes frei gewordene Kasten sich rasch mit Bienen füllt, die durch den Übergang aus benachbarten Kästen stammen. Die Absperrung des Überganges erfolgt dabei mit Hilfe einer Platte, die von oben durch einen in der Seitenwand ausgebildeten Schlitz eingeführt ist und die in eingeschobenem Zustand die Übergangsöffnung vollständig bedeckt. Die Platte ist zur Positionierung am oberen Ende rechtwinkelig abgebogen, auf dieser Abbiegung liegt der Deckel des Kastens auf, so daß damit die Sperrplatte verschlossen ist.

Nach einer weiteren Ausführungsform der Erfindung wird die Anordnung der Bienenkästen so gewählt, daß zwei nebeneinander angeordnete Reihen von Bienenkästen unmittelbar gegenüberstehend vorgesehen werden, derart, daß eine Großeinheit entsteht. Der Übergang in den Kästen erfolgt hierbei nicht durch Übergänge in den Seitenwänden zweier benachbarter Kästen einer Reihe, sondern durch Übergänge von beliebigen Kästen einer Reihe zu beliebigen Kästen einer anderen Reihe über einen Wanderkanal, der in den einander zugewandten Seiten der Kästen der beiden Reihen ausgebildet ist und sich vorzugsweise ununterbrochen über die gesamte Länge der beiden Reihen erstreckt. Auf diese Weise besteht ohne weiteres die Möglichkeit, daß Bienen aus Kästen innerhalb einer Reihe über den Wanderkanal in eine andere Kästen derselben Reihe oder der anderen Reihe gelangen. Auch hierbei erfolgt die Fütterung der Bienen gesondert in jedem Bienenkasten. Diese Anordnung ermöglicht es, die Behandlung bzw. Bearbeitung der Bienenkästen innerhalb einer Doppelreihe von Kästen auf einige wenige voneinander entfernt liegende Kästen zu beschränken, so daß für den Imker eine erhebliche Arbeitsersparnis erzielt werden kann.

Mit einer derartigen Vorrichtung wird erreicht, daß die Großeinheit aus einer Vielzahl von sehr einfach aufgebauten und zusammenfügbaren Einzelkästen erstellt werden kann, daß die einzelnen Kästen in der Großeinheit durch einfaches Aneinanderreihen beliebig erweiterbar sind, daß wenig Material für die Herstellung benötigt wird, daß die Herstellung sehr einfach ist und daß durch die Möglichkeit des baukastenförmigen Zusammensetzens der einzelnen Bienenkästen der einzelne Imker die Möglichkeit hat, sich die Kästen selbst zusammenzusetzen. Damit sind Lagerhaltung und Versand derartiger Einzelkästen besonders einfach und zweckmäßig. Des weiteren ist es möglich, auf einfache und zweckmäßige Weise die Bienen, die zur Verhinderung des Schwärmens aus einem Bienenvolk entnommen werden, in Form eines Kunstschwarmes in einen Zusatzkasten zu setzen, dessen Grundrißfläche und Aufbau bei geringerer Höhe dem des Bienenkastens entspricht, so daß dieser Zusatzkasten auf den Bienenkasten aufgesetzt werden kann, wenn vorher Decke des Bienenkastens und Boden des Zusatzkastens entfernt werden, so daß eine höhere Einheit entsteht. Bienenkästen der der Erfindung zugrundeliegenden Art haben weiterhin auch gegenüber bekannten Großraumbeuten den Vorteil, daß sie im Aufbau variabel sind, daß sie mit der Rückseite unmittelbar an eine Wand gestellt werden kann, da die Rückseite eines jeden derartigen Bienenkastens - zumindest bei einer einreihigen Gruppierung - keine Austrittsöffnungen (Fluglöcher, Durchlässe oder dergl.) enthält.

Im einzelnen sind die Bienenkästen und Zusatzkästen so aufgebaut, daß sie aus einem quaderförmigen Rahmen aus Holze bestehen, der eine Einfassung für die Seiten-, die Boden- und die Deckflächen des Quaders darstellt, mit Ausnahme des wesentlichen Teiles der Seitenwände, die aus Schaumstoff, z.B. Hart-Styropor oder dergl. wärmeisolierendem Material (das so beschaffen sein muß, daß es von den Bienen nicht angenagt wird) bestehen, mit Ausnahme der Seitenfläche, die den indirekten Übergang zum nächssten Kasten aufweist.

Für die mit dem erfindungsgemäßen Verfahren und mit der erfindungsgemäßen Vorrichtung gewonnenen Kunstschwärme werden Transport- und Sammelkästen benötigt, die einfach und zweckmäßig ausgebildet sind. Derartige Transportkästen weisen einen Schiebeboden auf, der ein Öffnen des Kastenbodens gewährleistet. Dadurch können Bienen, die beim Transport verendet sind, auf besonders einfache Weise entfernt werden, nämlich durch einfaches Herausziehen des Bodens, so daß die toten Bienen von selbst aus dem Gehäuse nach unten fallen. Die Deckwand ist fest in den quaderförmigen Kasten integriert, der auf zwei gegenüberliegenden Seiten eine mit Gitter verkleidete Öffnung für die Licht- und Luftzufuhr zum Kasten aufweist. Derartige Transportkästen bestehen aus Hartfasermaterial oder entsprechendem Material mit Massivholzverstärkung an den Ecken sowie einer massiven Deckwand aus Holz, in der eine verschließbare Öffnung für die Zugabe der Königin sowie ein in das Innere des Behälters von der Decke nach unten stehender Futtersack vorgesehen sind. Am unteren Ende einer der Seitenwände besitzt der Kasten eine einstellbar verschließbare breite Öffnung, die die Flugöffnung darstellt.

Um die für die Durchführung der Erfindung erforderliche Zucht von widerstandsfähigen Königinnen auf zweckmäßige und rationelle Art vornehmen zu können, werden Königinnen-Begattungskästen vorgeschlagen, die für die Königinnen-Massenzucht besonders geeignet sind. Derartige Begattungskästen sind so aufgebaut, daß sie aus Schaumstoff oder entsprechendem isolierendem Material mit oberen und unteren verstärkenden Rahmenteilen aus Holz bestehen. Das obere Rahmenteil weist eine umlaufende, stufenförmige Ausfräsung oder dergl. auf, auf der eine Mehrzahl von Platten, z.B. aus Holz, angeordnet sind; jede dieser Platten nimmt eine an ihr befestigte, sich nach innen in das Gehäuse erstreckende Kunststoffwabe (Mittelwandwabe) auf. Zwischen jeweils zwei benachbarte
Waben ist eine Zwischenwand eingesetzt, so daß zwischen einer
Seitenwand und der benachbarten Zwischenwand oder zwischen benachbarten Zwischenwänden jeweils Abteile geschaffen werden,
die über seitliche Luftlöcher mit der Außenwelt in Verbindung
stehen. Bei einer praktischen Ausführungsform mit sechs Waben
pro Kasten sind drei Abteile vorgesehen, die durch zwei Zwischenwände bzw. Schiede gebildet sind. Im unteren Rahmenteil sind
seitlich mit Sperrgitter verschlossene Luftlöcher sowie Fluglöcher vorgesehen. Derartige Kästen sind vorzugsweise so aufgestellt, daß sie mit der Rückwand z.B. an einem Pfahl aus Holz
aufgehängt sind. z.B. kann auf den beiden gegenüberliegenden
Seiten eines Pfahles je am Kasten symmetrisch abnehmbar befestigt
sein. Die Königinnen-Begattungskästen weisen pro Abteil eine
Öffnung in den Abdeckplatten auf, durch die hindurch eine Flüssigfütterung mit Fläschchen vorgenommen werden kann, das auf die
Abdeckung gestellt wird. Ferner stellt ein derartiger Aufsatz
einen Wind- und Regenschutz dar. Auch dieser Aufsatz wird beispielsweise auf den vorstehend erwähnten Pfahl aufgehängt.

Nachstehend wird die Erfindung in Verbindung mit der Zeichnung
anhand von Ausführungsbeispiele-n erläutert. Es zeigen:

Fig. 1 eine Grupp-ierung von in Reihe nebeneinander angeordneten einzelnen Bienenkästen,

Fig. 2 eine Gruppierung von zwei parallelen Reihen von Bienenkästen,

Fig. 3 in vergrößertem Maßstab einen Schnitt längs der Linie
       I-I der Fig. 1 bzw. II-II der Fig. 2, mit geöffnetem indirektem Durchgang,

Fig. 4 zwei zu einer Sperrvorrichtung des indirekten Durchganges
       zusammenwirkende Schieber in einer Ansicht von oben,

Fig. 5 die Darstellung nach Fig. 3, jedoch mit geschlossenem
       Schieber,

Fig. 6 einen Zusatzbrutkasten zur Aufnahme der zur Verhinderung des Auftretens der Schwarmstimmung aus einem Bienenkasten entfernten Bienen,

Fig. 7 eine Kombination aus Bienenkästen und Zusatzbrutkästen,

Fig. 8 die Darstellung des Bausatzes eines Bienenkastens (ohne Deckwand),

Fig. 9 eine spezielle Ausführungsform einer gemäß der Erfindung verwendeten Kunststoffbienenwabe mit Drohnenzellen,

Fig. 10 eine Anordnung aus Brutraum, Honigraum und oberem Abschlußdeckel in versperrtem Zustand, schematisch dargestellt,

Fig. 11 eine Ausführungsform der in Fig. 10 verwendeten Diebstahlsicherung,

Fig. 12 eine perspektivische Darstellung einer speziellen Ausführungsform eines Brutkastens nach der Erfindung,

Fig. 13 eine Ausführungsform einer Verriegelung zweier übereinander gesetzter Kästen,

Fig. 14 eine spezielle Ausführungsform einer Sperre für den Übergang, wie sie in Fig. 12 gezeigt ist,

Fig. 15 einen Vorsatz zum Abdecken der Fluglöcher, für einen Kasten nach Fig. 12,

Fig. 16 einen Luftgittervorsatz für einen Kasten nach Fig. 12,

Fig. 17 in perspektivischer Darstellung einen Königinnen-Begattungskasten,

Fig. 18 einen Schnitt durch einen Teil des Kastens nach Fig. 17, längs der Linie III-III,

Fig. 19 einen Schnitt durch einen Teil des Kastens nach Fig. 17, längs der Linie IV-IV,

Fig. 20 einen Aufsatz auf den Kasten nach Fig. 17,

Fig. 21 im Schnitt eine Anordnung aus Ständer mit beidseitig aufgehängten Kästen nach Fig. 17 und Aufsätzen nach Fig. 20, und

Fig. 22 einen Transport- oder Sammelkasten für Kunstschwärme, im Schnitt.

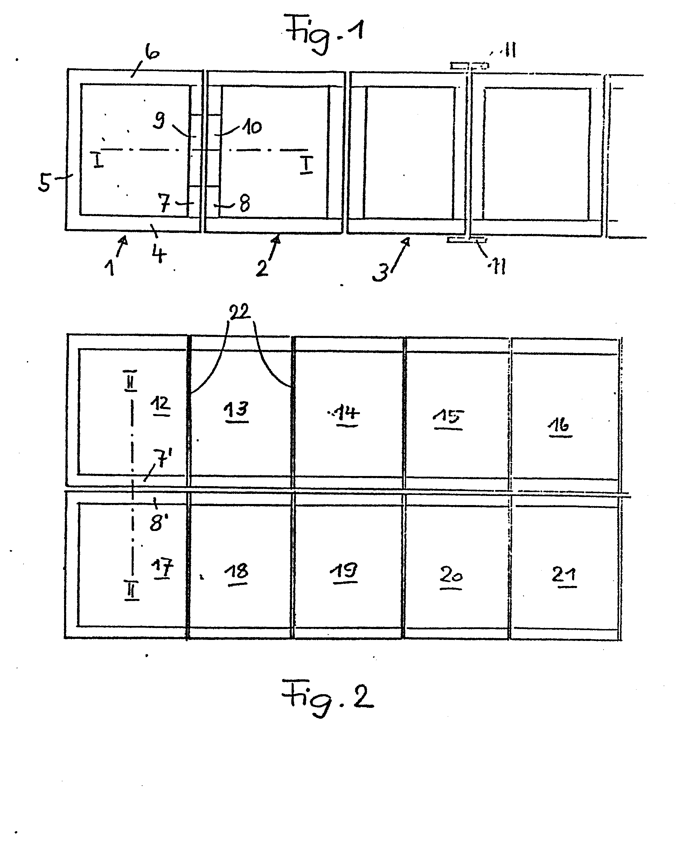

Fig. 1 zeigt eine aus einer Gruppe von nebeneinander angeordneten Bienenkästen bestehende Vorrichtung nach der Erfindung. Die einzelnen Kästen 1, 2, 3, 4 ... sind nebeneinander und miteinander verbunden als eine Einzelreihe oder Zeile dargestellt. Jeder einzelne Kasten besteht aus wäremisolierten Einzelwänden 4, 5, 6, 7, wobei jeweils zwei benachbarte Wände 7 und 8 zweier benachbarter Bienenkästen aneinandergestellt sind. Diese beiden Wände 7 und 8 weisen jeweils einen Übergang 9, 10 in Form einer indirekten Verbindung auf, der es den Bienen gestattet, z.B. aus einem Kasten 1 in einen benachbarten Kasten 2 zu gelangen. Die Öffnungen der Übergänge 9 und 10 sind dabei durch einen gemeinsamen Schieber 11 verschließbar. Mit einer derartigen Vorrichtung wird erreicht, daß der Imker von den Kästen 1, 2 und 3 jeweils nur den mittleren Kasten 2 zu behandeln braucht, so daß die Kästen 1 und 3 bzw. die darin befindlichen Bienenvölker keinen weiteren Arbeitsaufwand erforderlich machen.

In Fig. 2 ist eine andere Ausführungsform der Erfindung dargestellt, in der zwei parallele Reihen von Bienenkästen nach Fig. 1 vorgesehen sind, nämlich die Bienenkästen 12, 13, 14, 15, 16 in einer Reihe und die Bienenkästen 17, 18, 19, 20, 21 in der parallelen Reihe. Die beiden Reihen 12 - 16 und 17 - 21 sind aneinander gestellt und ggf. miteinander befestigt, und es sind Übergänge in Form von indirekten Verbindungen zwischen den jeweils gegenüberliegenden Kästen 12 - 17, 13 - 18, 14 - 19, 15 - 20 und 16 - 21 vorgesehen. Bei dieser Ausführungsform nach Fig. 2 sind die Zwischenwände zwischen zwei benachbarten Bienenkästen dünnwandig ausgeführt; diese Wände stellen reine Trennwände zwischen benachbarten Käs-ten dar, die keinerlei Vorkehrungen für den Durchgang der Bienen von Kasten zu Kasten besitzen. Der Übergang bzw. eine Wanderung der Bienen erfolgt ausschließlich über einen Wanderkanal 39, der in den einander zugewandten Wandflächen der beiden gegenüberliegenden Reihen von Kästen durchgehend über die gesamte Längserstreckung der Reihen von Kästen ausgebildet ist. An diesem Wanderkanal 39 sind die indirekten Übergänge aller Bienenkästen der beiden Reihen angeschlossen, wobei der Wanderkanal selbst einen Teil dieser Übergänge darstellt, so daß die Bienen eines beliebigen Kastens beim Zurücklegen etwa der Hälfte der Strecke des Überganges dieses Kastens in den Wanderkanal gelangen und von dort durch einen beliebigen anderen Übergang in jeden anderen Kasten gelagen können, wenn sie die Hälfte der Strecke des Überganges des betreffenden Kastens entweder der gleichen oder der gegenüberliegenden Reihe zurücklegen.

Fig. 3 zeigt einen Schnitt längs der Linie I-I der Fig. 1 durch die Kästen 2, 3 bzw. einen Schnitt längs der Linie II-II der Fig. 2 durch die Kästen 12-17. Der Boden des Kastens 2 bzw. 12 ist mit 24, der des Kastens 3 bzw. 17 mit 25 bezeichnet, während die aneinanderstoßenden Seiten der beiden Bienenkästen mit 7 und 8 (Fig. 1) bzw. 7' und 8' (Fig. 2) bezeichnet sind. Jede Seitenwand 7,8 bzw. 7', 8' besteht aus einem unteren Abschnitt 25, 26, der am unteren Ende mit einem Querholz 27, 28 und am oberen Ende mit einem Querholz 29, 30 abgeschlossen ist. Hieran schließt sich nach oben der obere Abschnitt 31, 32 an, der auf beiden Seiten jeweils eine Öffnung 9, 10 aufweist; diese Öffnungen sind über die Übergangsabschnitte 33 und 35 miteinander verbunden und durch Innenwandungen 34 begrenzt. Mit 36 ist die Trennfuge zwischen zwei aneinanderstoßenden Kästen 2,3 bzw. 12, 17 bezeichnet. Der obere Absch itt der Seitenwand weist im Abstand voneinander angeordnete Rahmenteile 37, 38 aus Holz auf, deren Unterseite den Kanal nach oben begrenzt. Während der U-förmige Übergang 33 bei der Ausführungsform nach Fig. 1 mit im wesentlichen gleichbleibenden Querschnitt und bei der Darstellung nach Fig. 3 mit gleichbleibender Tiefe ausgebildet ist, ist dieser Kanal bei der Ausführungsform nach Fig. 2 zwar in den vertikalen Schenkeln des U in gleicher Weise mit gleichbleibendem Querschnitt und Tiefe ausgebildet, der waagrechte Verbindungsteil 39 ist im Falle der Fig. 2 jedoch in der Tiefe (senkrecht zur Zeichenebene nach Fig. 3) als durchgehender Wanderkanal ausgebildet, so daß die vertikalen Übergangsabschnitte 33, 35 zuführende und abführende Stichkanäle

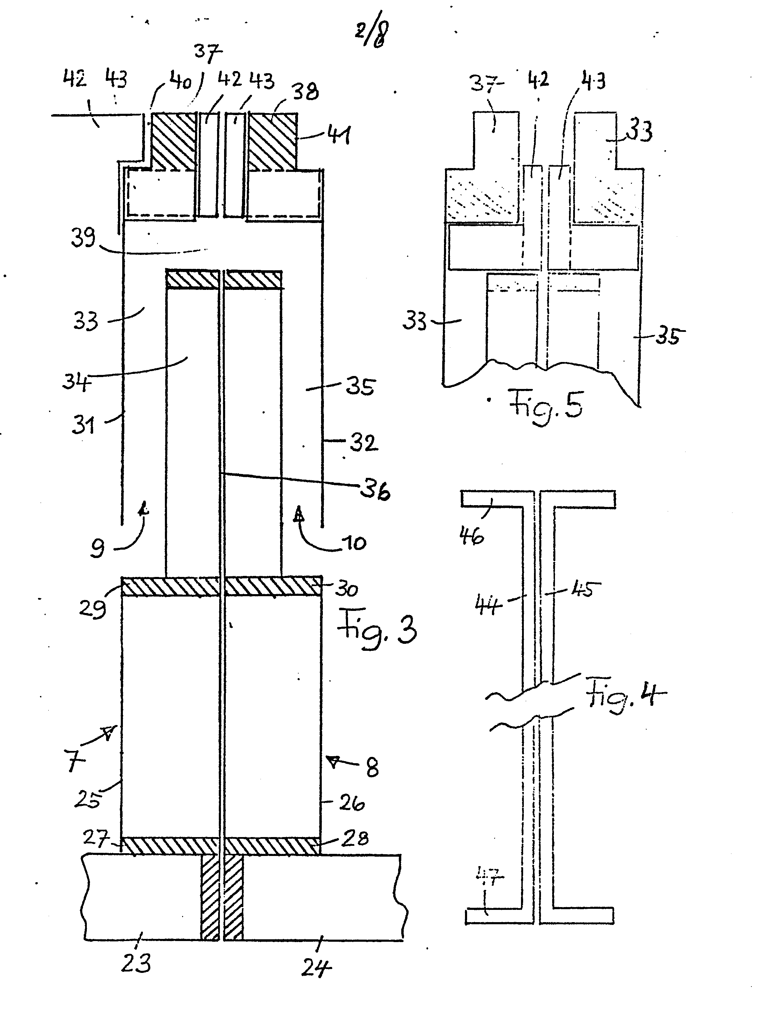

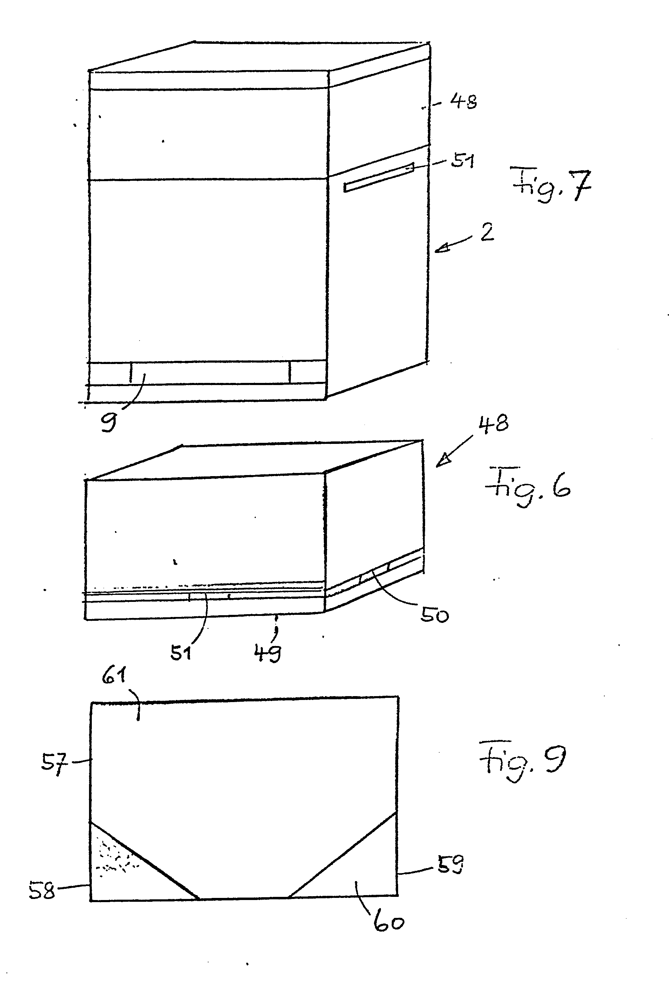

für den durchgehenden Wanderkanal 39 darstellen; damit können die Bienen von beliebigen Kästen der beiden parallelen Reihen von Bienenkästen Zugang zu dem allen Kästen gemeinsamen Wanderkanal erlangen und durch diesen hindurch zu jedem beliebigen anderen Kasten der beiden parallelen Reihen gelangen. Aussparungen 40, 41 an den Rahmenteilen 37, 38 dienen als Aufhängevorrichtung und für eine schematisch dargestellte Kunststoffwabe 42, die mit einem angeformten Ansatz 43 in die Aussparung 40 eingehängt dargestellt ist. Zwischen den Rahmenteilen 37 und 38 sind den jeweiligen Seitenwänden 7 und 8 bzw. 7', 8' zugeordnete und in diesen verschiebbar geführte Schieber 44, 45 vorgesehen, die beispielsweise die in Fig. 4 gezeigte Form haben und die zum Verschließen des Überganges 33-35 im horizontalen Abschnitt 39 dienen. Die Offenstellung des Schiebers ist in Fig. 3, die Geschlossenstellung in Fig.5 darstellt. Die Schieber 44, 45 erstrecken sich bei der Ausführungsform nach Fig. 1 über die gesamte Tiefe eines Kastens, d.h. in jedem Kasten von der Vorderseite zur Rückseite quer zur Erstreckung der gesamten Reihe von Kästen, während bei der Ausführungsform nach Fig. 2 die Schieber von einem Ende der Doppelreihe von Kästen zum entgegengesetzten, also in Längsrichtung der Reihen und über den zwischen den beiden parallelen Reihen bestehenden Spalt reichen. An den beiden Enden weisen die Schieber 44, 45 jeweils Schenkel 46, 47 auf, die die jeweilige Wand des Kastens umfassen und dadurch positioniert werden. Die Ausführungsform derartiger Schieber 44, 45 kann jedoch auch so gewählt sein, daß die Schieber lediglich der Breite der durch den Kanal gebildeten Durchgangsöffnungen entsprechen und in anderer Weise festgelegt werden. Diese Schieber können jedoch auch in Form anders ausgestalteter Schiebervorrichtungen ausgebildet sein, so daß es auf die konstruktive Ausgestaltung einer solchen Sperrvorrichtung nicht ankommt.

In Fig. 6 ist ein Zusatzkasten 48 dargestellt, der als zusätzlicher kleiner Brutraum dient, wenn aus einem jeweils behandelten Bienenkasten, z.B. 2, zur Verhinderung der Schwarmbildung ein Teil des Bienenvolkes entfernt wird.

Dieser Kasten 48 ist so ausgebildet, daß der Boden 49 leicht abnehmbar ist, so daß bei Abnahme der Deckwand eines Bienenkastens 2 dieser Brutraum als zusätzlicher Honigraum auf den Kasten 2 aufgesetzt werden kann und damit nutzbar eingesetzt wird. Im Übrigen kann der zusätzliche Brutraum 48 in ähnlicher Weise wie ein Bienenkasten 2, 3 usw. ausgebildet sein, besitzt insbesondere die gleiche Grundfläche. Die dargestellten Öffnungen 50 sind Fluglöcher. In Fig. 7 ist der Zusatzkasten 48 (nach Entfernen seines Bodens) auf einen Bienenkasten 2 (nachdem dessen Deckwand entfernt worden ist) aufgesetzt. Mit 51 ist eine Öffnung angedeutet, die den Übergang der Bienen von dem Bienenkasten 2 in den benachbarten Bienenkasten 3 ermöglicht. Mit 9 ist der in Fig. 3 dargestellte Zugang angedeutet.

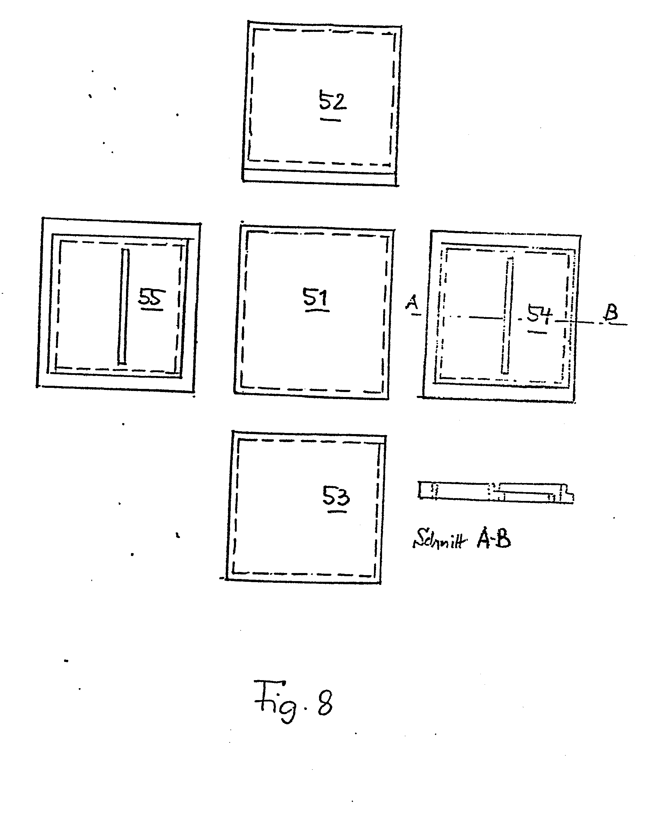

Fig. 8 zeigt schematisch den baukastenförmigen Aufbau eines Bienenkastens 2 nach der Erfindung. Boden 52, Rückwand 53, Vorderwand 54 und die beiden Seitenwände 55, 56 sind als einzelne Elemente so aufgebaut, daß sie einfach zusammengesetzt und miteinander verleimt werden können, so daß die jeweiligen Bienenkästen auf besonders einfache und zweckmäßige Weise vom Imker selbst zusammengebaut und zerlegt geliefert werden können. Dies trägt wesentlich zur Einsparung der Versandkosten, zur Kostensenkung bei der Lagerhaltung und dgl. bei.

Fig. 9 zeigt eine Ausführungsform einer Kunststoffwabe 57, die im Bereich der beiden unteren Ecken 58, 59 Drohnenzellen 60 mit entsprechend größerem Durchmesser aufweist, während der übrige und damit überwiegende Teil der Kunststoffwabe 57 mit Zellen für die Arbeitsbienen versehen ist; letztere sind zur Durchführung des erfindungsgemäßen Verfahrens mit unterschiedlichen Durchmessern ausgebildet. Unabhängig von diesen speziellen Waben 57 - 61 werden jedoch in den Bienenkästen auch gesonderte Drohnenwaben vorgesehen, die ausschließlich aus Drohnenzellen bestehen.

Um den Zugriff in das Innere der Bienenkästen zu verhindern, und damit den Diebstahl von Honigwaben, von Bienen in den Kästen oder aber von ganzen Einzelkästen zu verhindern, wird vorgeschlagen, eine Diebstahlsicherung vorzusehen, die jeweils zwei vertikal oder horizontal aneinander angrenzende Kästen miteinander so verriegelt, daß die Kästen nur mit einem Schlüssel oder einem Spezialwerkzeug zu öffnen sind. Eine einfache Ausführungsform einer derartigen Diebstahlsicherung ist in Fig. 10 und 11 anhand zweier übereinander angeordneter Kästen schematisch dargestellt. Der untere Kasten 62 ruht hierbei auf einer Unterlage 73, z.B. einer Holzbohle, während auf dem unteren Kasten 62 ein oberer Kasten 64 angeordnet ist. Die Darstellung nach Fig. 11 zeigt die Diebstahlsicherung zwischen oberem und unterem Kasten.

Im unteren Ende des oberen Kastens 64 ist ein Träger 65, z.B. ein Balken aus Holz eingesetzt, im oberen Ende des unteren Kastens 62 ein Träger 66, und beide Träger liegen unmittelbar übereinander. Der Träger 66 weist einen nach außen vorstehenden, z.B. kreisringförmigen Ansatz 67 auf, der eine Bohrung 68 umschließt. Im oberen Träger 65 ist ein L-förmiger Haken 69, 70 eingesetzt, dessen vertikaler Schenkel 70 in eine Aussparung 71 des unteren Trägers 66 eingreift und im unteren Bereich eine Paßöffnung 72 für einen Schraubbolzen 73 besitzt, dessen Schraubkopf 74 innerhalb der Bohrung 68 liegt. Im Träger 66 ist eine Schraubmutter 75 fest positioniert, die den Schraubbolzen 73 aufnimmt. Der Kopf 74 hat eine spezielle Form, ist z.B. dreieckförmig ausgebildet, und kann beispielsweise mit einem zugehörigen Steckschlüssel (nicht dargestellt) betätigt werden, da ein Zugriff zum Kopf 75 von außen anders nicht möglich ist. Das in den Schenkel 71 eingreifende Ende des Schraubbolzens 73 ist z.B. spitz zulaufend ausgebildet, so daß beim Eindrehen der Schraube der Schaft 71 nach unten gedrückt und damit die Verbindung zwischen den Trägern 65 und 66 festgezogen wird. Die Verbindung zwischen den Kästen 62 und 64 läßt sich nur lösen, wenn der Schraubkopf 74 nach außen gedreht wird (mittels Steckschlüssel), so daß Unbefugten daß Lösen dieser Schraubverbindungnicht möglich ist. Anstelle der vorbeschriebenen speziellen Ausgestaltung der Diebstahlsicherung kann eine andere Art von Verriegelung vorgesehen werden, falls die Wirkung die der vorbeschriebenen Diebstahlsicherung ist.

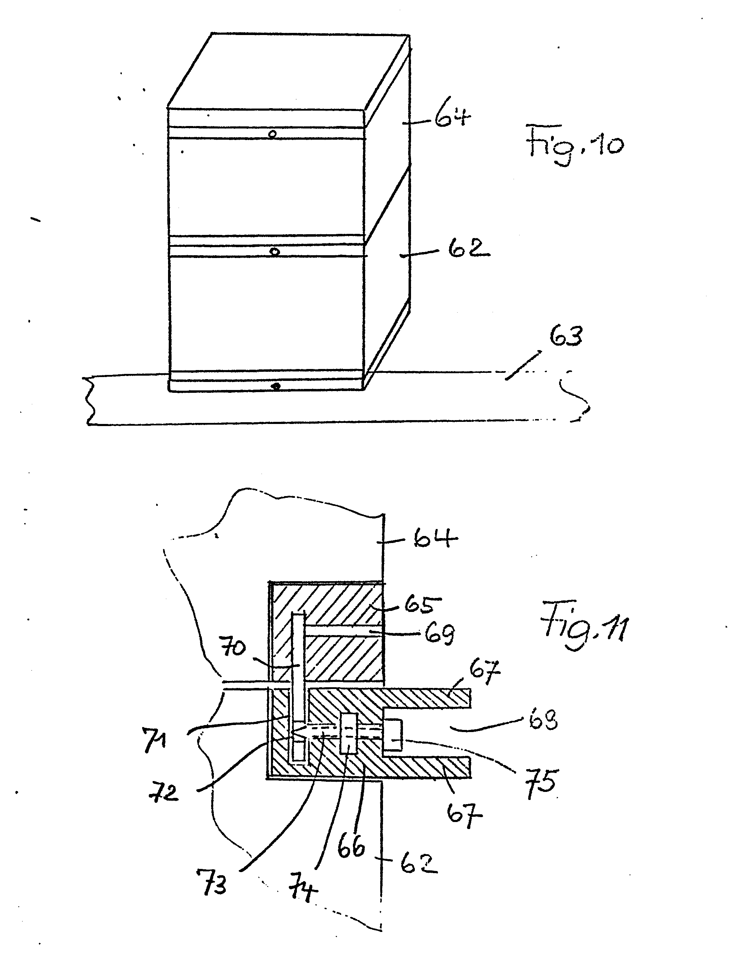

In Fig. 12 ist eine spezielle Ausführungsform eines Brutkastens (ohne Deckel) dargestellt. Die Seitenwand 76 dieses Kastens ist die Wand, die unmittelbar mit einer identischen Wand eines benachbarten Kastens zusammenstoßend angeordnet ist, so daß durch die beiden benachbarten Wände der innere Übergang für die Bienen geschaffen wird, wie er in Fig. 3 dargestellt ist. Diese Seitenwand besteht aus Holz, Hartfaser oder dergl. Die übrigen Seitenwände bestehen aus Hartschaumstoff oder dergl. wärmeisolierendem Material, das von den Bienen nicht angenagt werden kann, und weisen Verstärkungs- und Versteifungsleisten aus Holz auf, die mit 77, 78, 79, 80, 81 und 82 bezeichnet sind; mit 82 ist eine balkonartige Holzversteifung bezeichnet, die die Flugöffnung 83 begrenzt. Mit 84 ist die Übergangsöffnung zum nächsten Kasten bezeichnet, die mit einer Platte 85 verschlossen werden kann, die in eine entsprechende schlitzförmige Aussparung der Wand 76 von der Oberseite 79 her eingesetzt wird. Mit 86 sind zwei Verriegelungselemente dar-gestellt, die auf der Oberseite der Holzversteifung 80 befestigt, vorzugsweise in diese Oberseite eingelassen sind. Auf der entgegengesetzten Seite des Kastens ist im Balken 77 eine schematisch angedeutete Schloßvorrichtung eingelassen, die mit Hilfe eines Schlüssels betätigbar ist und die in eine entsprechende Raste auf der Unterseite des zugeordneten, darüber angeordneten Kastens eingreift. In Fig. 13 ist die Verriegelung im einzelnen dargestellt. In der Holzversteifung 80 ist das Verriegelungselement 86 eingelassen befestigt. Dieses Element ist auf einer Seite bogenförmig nach oben geformt und besitzt auf dem darüber angeordneten Kasten bzw. Deckel 88 ein Gegenstück in Form eines Verriegelungselementes 91, das dem Bogen 90 gegenüberliegt und in verriegeltem Zustand in den Bogen 90 eingreift. Zur Aufnahme des Bogens 90 im darüberliegenden Kastenteil 88 ist in letzterem eine Aussparung 89 vorgesehen. Zur Verriegelung zweier zusammengehöriger

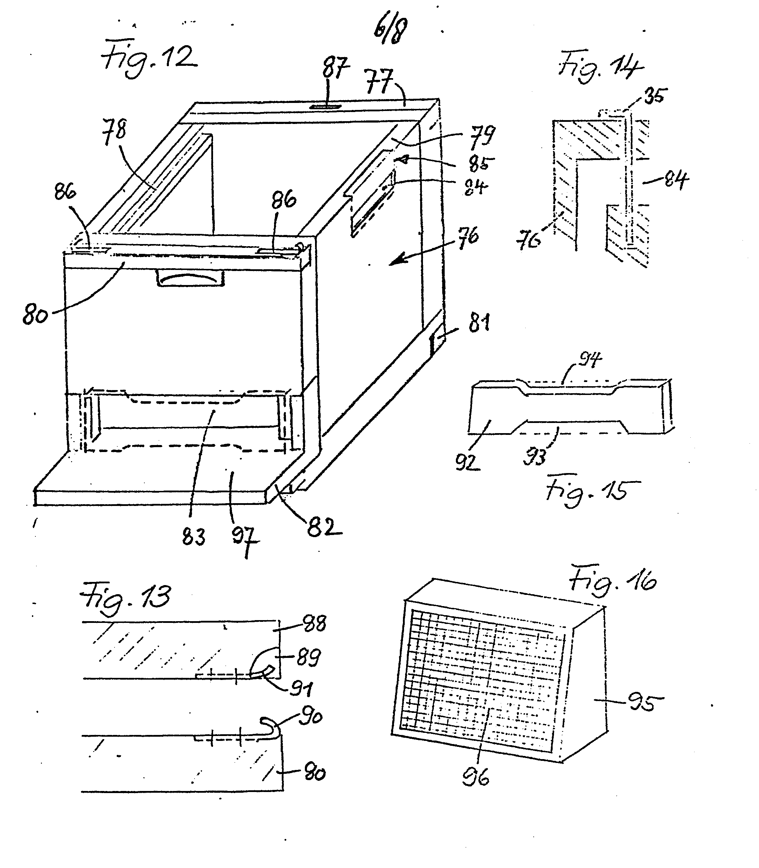

Kastenteile 80 und 88 wird der obere Kastenteil so auf den unteren gesetzt bzw. aufgeschoben, daß die Elemente 90 und 91 ineinandergreifen. Dann wird auf der entgegengesetzten Seite ein Schloß betätigt, das auf dieser entgegengesetzten Seite die beiden Kastenteile miteinander fest verbindet. In Fig. 14 ist die Absperrung für den Übergang im Schnitt dargestellt. Die Öffnung 34 wird durch die Platte 85 verschlossen, die am oberen Ende um 90° abgebogen ist. Dieser abgebogene Teil positioniert die Platte 85 und dient gleichzeitig als Griff zur Herausnahme der Platte aus dem Schlitz und damit zum Öffnen des Überganges. Zur Begrenzung der Flugöffnung ist ein in Fig. 15 dargestellter Vorsatz 92 aus Holz vorgesehen, der auf die Vorrichtung 82 aufgesetzt wird. Dieser Vorsatz 92 weist eine höhere Aussparung 93 und auf der entgegengesetzten Seite eine niedrigere Aussparung 94 auf, so daß die Begrenzung der Flugöffnung variabel gestaltet werden kann. Für den Transport der Kästen ist ein in Fig. 16 dargestellter Luftgittervorsatz 95 vorgesehen, der auf die Vorrichtung 82 aufgesetzt wird und die gesamte Öffnung 83 abschließt. Dieser Vorsatz besteht aus einem Holzrahmen und ist auf seiner gesamten Fläche mit einem Gitter 96 geschlossen, so daß die Bienen einen Ausweich- oder Sammelraum erhalten und die Luftzufuhr zum Kasten verbessert wird, während andererseits das Gitter so eng gewählt ist, daß die Bienen diesen Vorsatz nicht verlassen können.

Die Figuren 17, 18 und 19 zeigen den Aufbau der Königinnen-Begattungskästen. Ein solcher Kasten ist in perspektivischer Ansicht in Fig. 17 mit 96 bezeichnet. Er ist quaderförmig aufgebaut, weist einen oberen geschlossenen Rechteckrahmen 97 und einen unteren, ebenfalls rechteckförmigen und geschlossenen Rahmen 98 sowie dazwischenliegende Seitenwände 99 aus Hartschaum oder dergl. wärmeisolierendem Kunststoff auf. Im unteren Rahmenteil sind auf drei Seiten jeweils ein Luftloch 100 mit Sperrgitterverschluß sowie ein Flugloch 101 vorgesehen. Die Abdeckung erfolgt über drei nebeneinander liegende, identische Deckplatten 102, deren jede aus spiegelbildlich gleichen Hälften 102a und 102b besteht, deren Enden in stufenförmigen Vertiefungen 103 der gegenüberliegenden Rahmenteile

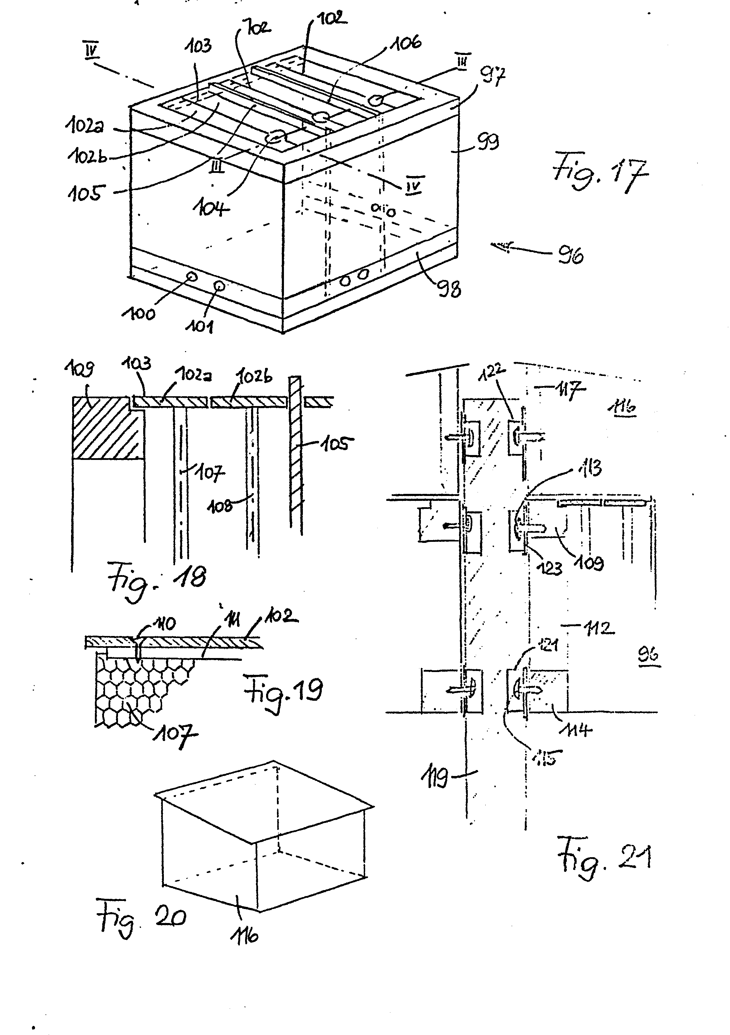

des Rahmens 97 bestehen und miteinander Öffnungen 104 bilden. Der Innenraum eines jeden Kastens 96 ist bei der dargestellten Ausführungsform mit Hilfe von Zwischenwänden 105, 106 in drei gleichgroße Abteile geteilt, deren jedes eines der Luftlöcher 100 und eines der Fluglöcher 101 aufweist, so daß alle drei Abteile in gleicher Weise benutzbar sind. Auf jeder der Teilplatten 102a, 102b ist je eine Kunststoffwabe 107, 108 befestigt, die als Mittelwandwaben ausgebildet sind. Jede dieser Waben kann aus dem Kasten 96 als Einheit mit der Teilplatte 102a oder 102b entnommen werden. Die Kunststoffwaben 107 sind mit den Teilplatten 102 über Schraubverbindungen 110 befestigt. Zu diesem Zweck weisen die Kunststoffwaben 107 am oberen Rand eines Königinnen-Begattungskastens 96 eine Versteifung 111 auf. Der Kasten 96 weist einen Haken 113 oder dergl. sowie im unteren Rahmenteil 114 einen entsprechenden Haken 115 oder dergl. auf. Auf dem Kasten 96 ist ein Aufsatz 116 aus Hartfasermaterial oder dergl. aufgesetzt, der an der Rückwand Holzverstärkungsleisten 117 besitzt, in die ein weiterer Haken 118 eingesetzt ist. Auf einem in den Boden einzurahmenden Pfahl 119 sind auf beiden Breitseiten im Abstand der Haken 113, 115 und 118 Aussparungen 120, 121, 122 vorgesehen, die mit Metallplatten 123 überbrückt sind, welche zur Aufnahme der Haken 113, 115, 118 schlitzförmige Aussparungen enthalten, so daß Kästen 96 und Aufsätze 116 eingehängt werden können. Wie in Fig. 21 gezeigt, erfolgt die Anordnung dieser Kästen und Aufsätze symmetrisch.

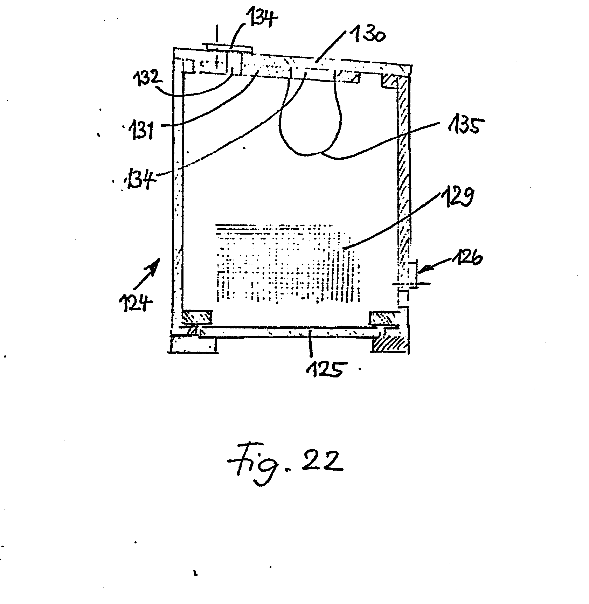

Fig. 22 zeigt eine spezielle Ausführungsform eines Transport- oder Sammelkastens für Kunstschwärme. Der mit 124 bezeichnete Kasten ist quaderförmig ausgebildet und besteht aus Holzfasermaterial oder einem entsprechenden Material, das von den Bienen nicht angenagt wird. Der Boden 125 des Gehäuses ist als Schieberboden ausgebildet und kann herausgezogen werden. Er steht an einem Ende in Anschlag mit dem Rahmen des Kastens 124 und ist mit seinem entgegengesetzten Ende durch einen Reiberverschluß festgelegt. Am unteren Ende des Kastens 124 ist eine Öffnung 127 für den Eintritt und den Austritt der Bienen vorgesehen. Diese Öffnung 127 ist beispielsweise durch einen außermittig gelagerten Drehverschluß 128 verschließbar. Auf zwei gegenüberliegenden Seiten des Kastens 124 ist jeweils ein Gitter 129 vorgesehen, durch das Luft und Licht in den Transportkasten gelangt. Die Deckwand 130 des Kastens 124 weist eine Holzverstärkung 131 auf, in der Öffnungen 132 und 133 vorgesehen sind. Die Öffnung 132 ist mit einem Drehverschluß 134 verschließbar und dient zum Einführen einer Königin in das Kasteninnere. Die Öffnung 133 dient zur Aufnahme eines Futtersackes 135.

- 1 -

0095016

<u>Patentansprüche:</u>

1. Verfahren zum Züchten von Bienen in mindestens zwei eine erweiterbare Einheit bildenden, nebeneinander angeordneten Bienenkästen mit einem freien Durchgang für die Bienen zwischen benachbarten Kästen, wobei in jedem einzelnen Bienenkasten ein Bienenvolk mit einer Bienenkönigin vorhanden ist, und wobei die Bienenkönigin am Übergang von einem Kasten in den anderen gehindert wird, die Bienen jedoch über diesen Übergang in andere Kästen wandern können, dadurch gekennzeichnet, daß von den in einer Reihe nebeneinander angeordneten Bienenkästen lediglich ein Teil dieser Kästen, vorzugsweise jeweils jeder zweite, fünte, achte, ... usw. behandelt bzw. bearbeitet wird, daß zur Verhinderung des Schwärmens bzw. zur Unterdrückung der Schwarmbildung ein Teil des Bienenvolkes aus dem behandelten Bienenkasten entnommen wird und die fehlenden Bienen dadurch wieder ersetzt werden, daß sie aus anderen Kästen in den bzw. die behandelten Kästen abwandern, und daß die Bienenkästen mit Kunststoffwaben mit herkömmlichem Zellendurchmesser besetzt und nach jeweils einem längeren Zeitraum, z.B. einem oder mehreren Jahren, mehrmals durch Kunststoffwaben mit größerem Zellendurchmesser ersetzt und auf diese Weise Bienen mit größerem und kräftigerem Wuchs sowie mit höherer Widerstandsfähigkeit gezogen werden.

2. Verfahren nach Anspruch 1, dadurch gekennzeichnet, daß kräftige, gesundere Bienenvölker als Besatz für die Kunststoffwaben mit normalem Zellendurchmesser ausgewählt werden, und daß der Zellendurchmesser der in Zeitabständen nacheinander verwendeten Kunststoffwaben jeweils um ca. 5% größer gewählt wird, wobei vorzugsweise eine Zellenwandhöhe gleich der etwa 0,75fachen natürlichen Zellenwandhöhe (Wachswaben = 12,5 mm = 100%) verwendet werden.

3. Verfahren nach Anspruch 1 oder 2, dadurch gekennzeichnet, daß zwei parallele Reihen von nebeneinander angeordneten Bienenkästen zu einer Großeinheit zusammengesetzt werden, daß jeweils die beiden einander unmittelbar gegenüberstehenden Kästen der beiden parallelen Reihen miteinander für den Übergang der Bie-nen,nicht aber der Königinnen, verbunden werden, und daß die einzelnen Übergänge so miteinander verbunden werden, daß die Bienen von jedem Bienenkasten der beiden Reihen von Bienenkästen aus zu jedem anderen Bienenkasten der beiden Reihen einen indirekten Zugang erhalten.

4. Vorrichtung zur Durchführung des Verfahrens nach einem der Ansprüche 1 - 3, dadurch gekennzeichnet, daß die Reihe von nebeneinander angeordneten Bienenkästen aus nebeneinander gestellten einzelnen Bienenkästen (1, 2, 3 ...) besteht, die in jeweils zwei aneinander stoßenden Seitenwandflächen (7, 8) kongruente Öffnungsübergänge (9, 10) aufweisen, welche in jeder Seitenwand einen aufsteigenden, umgekehrt L-förmigen Übergangsabschnitt (33, 35) bilden, wobei beide Kanalabschnitt sich zu einem gesamten, umgekehrt U-förmigen, kanalartigen Übergang (31) ergänzen, daß an der Trennstelle zweier benachbarter Seitenwände (7, 8) ein die Kanalöffnungen (bei 39)abdeckende (z.B. vertikal) beweglicher Schieber (44 - 47) in den Seitenwänden angeordnet ist, und daß die beiden Schieberteile (44, 45) im oberen Rahmenteil (37, 38) der beiden benachbarten Seitenwände verschiebbar geführt sind.

5. Vorrichtung zur Durchführung des Verfahrens nach einem der Ansprüche 1 - 3, dadurch gekennzeichnet, daß die beiden Reihen von nebeneinander angeordneten Bienenkästen (12, 13, 14, 15, 16; 17, 18, 19, 20, 21) aus ne-beneinander gestellten einzelnen Bienenkästen bestehen, daß zwischen den beiden Reihen von Bienenkästen in den einander zugewandten Seitenwandungen ein von einem Ende der Reihen zum anderen Ende durchgehender, horizontal verlaufender Wanderkanal (39) ausgebildet ist, der mit jedem der zu beiden Seiten angeordneten Bienenkästen eine Verbindung in Form eines in der dem Wanderkanal (39) zugewandten Seitenwand ausgebildeten Übergangsabschnitte (33, 35) aufweist, wobei die
beiden Übergangsabschnitte (33, 35) jeweils gegenüberliegender
und einander zugewandter Kastenwände zusammen einen U-förmigen
Übergang (31) von einem Kasten (z.B. 12) in den anderen Kasten
(z.B. 17) bilden, dessen vertikale Abschnitte (33, 35) vorzugsweise in den den Mittelsteg des U bildenden Wanderkanal (39)
münden, daß an der Trennstelle zweier benachbarter Seitenwände
ein die Kanalöffnungen (bei 39) abdeckender (z.B. vertikal) beweglicher Schieber (44 - 47) in den Seitenwänden angeordnet ist,
wobei jeder Schieberteil vorzugsweise eine langgestreckte, U-förmige Gestalt aufweist und die beiden Schieberteile über ihre
Mittelstege aneinander anliegen, die die Absperrmittel darstellen,
während die Außenschenkel des U Arretierungs- und Haltemittel sind,
und daß die beiden Schieberteile (44, 45) im oberen Rahmenteil
(37, 38) der beiden benachbarten Seitenwände verschiebbar geführt
sind.

6. Vorrichtung nach Anspruch 4 oder 5, dadurch gekennzeichnet,
daß eine Kombination aus Brutraum (mit U-förmigem Übergang),
mehreren Honigräumen, Abschlußdeckel und Zusatzkasten (ohne U-förmigen Übergang) so ausgelegt ist, daß zur Scharmzeit Brutraum,
Honigraum und Deckel als Einheit mit entsprechenden Einheiten zusammen einsetzbar ist und ferner Zusatzkasten, Honigraum und
Deckel die Dimensionen eines Brutraumes haben und als solcher
außerhalb der Schwarmzeit verwendbar sind, bzw. daß ein getrennter, zusätzlicher Brutkasten mit einem Bienenkasten als zusätzlicher Honigraum kombinierbar ist, indem seine Bodenwand und die
Deckwand des entsprechenden Bienenkastens entfernt werden.

7. Vorrichtung nach einem der Ansprüche 4 - 6, dadurch gekennzeichnet, daß die einander zugewandten und aneinander anliegenden Seitenwandungen aus einem unteren Abschnitt und einem oberen, den
Verbindungskanal und den Deckrahmen aufweisenden Abschnitt bestehen, daß der Deckrahmen Aussparungen mit Führungen für die Schieber auf den einander zugewandten Seiten sowie Aussparungen zur Aufnahme bzw. Halterung der Kunststoffwaben auf den voneinander abgewandten Seiten aufweist, und daß der obere Abschnitt und der untere Abschnitt vorzugsweise durch eine Zwischenwand voneinander getrennt sind.

8. Vorrichtung nach einem der Ansprüche 5 - 7 , dadurch gekennzeichnet, daß die einzelnen Kästen mit einer Diebstahlsicherung versehen sind, die so ausgebildet ist, daß an einander zugeordneten Stellen zweier benachbarter Kästen bzw. eines Kastens und einer Deck- oder Bodenwand je ein Element einer Verriegelungsvorrichtung (69, 70; 86, 90, 91) vorgesehen ist, daß ein in einem Kasten festgelegtes Sperrorgan in den benachbarten Kasten eingreift und verriegelbar ist, daß in den beiden aneinander - stoßenden Wänden zweier benachbarter Kästen jeweils ein massiver Träger, Balken oder dergl. angeordnet ist, daß einer der beiden Träger das stationär angeordnete Sperrorgan aufweist, das in eine Aussparung des anderen Trägers eingreift, und daß im anderen Träger ein schlüsselartiges Verriegelungselement vorgesehen ist, das in die Aussparung des Sperrorgans verriegelnd eingreift.

9. Vorrichtung nach einem der Ansprüche 4 - 8, gekennzeichnet durch einen Brutkasten bestehend aus einem Holzrahmen (77 - 82) mit oberen und unteren Verstärkungsleisten, aus Seitenflächen und Boden aus Hartschaumstoff, mindestens einem über den Brutkasten angeordneten Honigkasten, und einem Abschlußdeckel, wobei wahlweise der Honigkasten mit einem als Untersatz ausgebildeten Zusatzkasten zu einem Brutraum (ohne U-förmigen Übergang) kombinierbar ist, durch einen Übergang (33, 39) in Form einer U-Hälfte in einer Seitenwand (76) des Brutkastens, dessen Zugang bzw. Abgang im unteren und dessen Übergangsöffnung (84) im oberen Abschnitt dieser Seitenwand ausgebildet ist, wobei die Übergangsöffnung durch eine von oben her in einen Schlitz der Seitenwand einsteckbare Verschlußplatte (85) verschließbar ist, durch Verriegelungselemente (86, 87) auf der Oberseite des Brutkastens an zwei gegenüberliegenden Seitenflächen, die in Eingriff mit Gegenelementen auf dem darüber- bzw. darunterliegenden Kastenteil stehen, durch einen Luftgittervorsatz (95) für den Transport des Brutkastens, der lösbar der Flugöffnung (83) vorgeschaltet ist, und durch einen abnehmbaren Vorsatz (92) zum verstellbaren Abdecken der Flugöffnung des Brutkastens.

10. Vorrichtung nach einem der Ansprüche 4 - 9, gekennzeichnet durch einen Königinnen-Begattungskasten (96) mit mehreren Abteilen, die voneinander durch Zwischenwände (105, 106) getrennt sind, und deren jedes Luft- und Fluglöcher (100, 101) besitzt, in ihrer Gesamtheit die Deckwand bildende Platten (102), die nach unten in die Abteile ragend Kunststoffwaben (107, 108), vorzugsweise Mittelwandwaben, aufweisen, einen Aufsatzkasten (116) als Fütterungs- und Witterungsschutz, hakenförmige Befestigungselemente (113, 115) an der Rückseite der Begattungskästen, die in Aufnahmeelemente (120, 121) einhängbar sind, welche auf beiden Seiten eines Pfahles (119) oder dergl. befestigt sind, wobei Begattungskästen aus oberen und unteren Holzrahmen (97, 98) sowie Schaumstoffseitenwänden und -boden bestehen.

11. Vorrichtung nach einem der Ansprüche 4 - 10, gekennzeichnet durch einen Transport- und Sammelkasten (124) für das Versenden von Kunstschwärmen mit als Schieber ausgebildeten, herausziehbaren Boden, mit auf gegenüberliegenden Seitenflächen vorgesehenen Gittern, mit einer auf der Deckseite ausgebildeten, verschließbaren Öffnung zum Einführen der Königin sowie mit einer Öffnung zum Einhängen eines Futtersackes.

0095016

1/8

Fig. 1

6

9   10

I           I

5

7   8

1   4       2       3       11

11

Fig. 2

22

II

12   13   14   15   16

7'

8'

17   18   19   20   21

II

Fig. 2

0095016

2/8

Fig. 3

Fig. 5

Fig. 4

Fig.7

48

51

2

9

Fig.6

48

50

51    49

Fig.9

61

57

58    60    59

4/8

52

55

51

54

A ___ 54 ___ B

53

Schnitt A-B

Fig. 8

Fig. 10

64

62

63

Fig. 11

64

65

69

70

67

63

71

72

75

67

66

73    74    62

Fig.12

87 77

78

79
85
84

86 86

76

80

81

Fig.14

35

84

76

76

94

92 93

Fig.15

83 97 82

Fig.13

88

89

91

90

80

Fig.16

95

96

0095016

Fig. 17

Fig. 18

Fig. 19

Fig. 20

Fig. 21

Fig. 22

0095016

EUROPÄISCHER RECHERCHENBERICHT

Nummer der Anmeldung

EP 83 10 1967

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y,A | FR-A-2 464 644 (M. SCHMIDT) * Ansprüche 1, 3, 8; Seite 1, Zeile 36 - Seite 3, Zeile 28; Figur 1 * | 1,3 | A 01 K 47/00 |
| D,A, Y | DE-A-2 539 494 (M. SCHMIDT) * Seite 2, Zeile 26 - Seite 5, Zeile 8; Seite 6, Zeile 21 - Seite 7, Zeile 10 * | 1,2 | |
| A | DE-A-2 124 821 (M. SCHMIDT) * Ansprüche 1-6; Seite 2, Zeile 14 - Seite 5, Zeile 30; Figur 1 * | 3-5 | |
| A | DE-U-1 874 280 (J. KÖNIG) * Ganzes Dokument * | 8 | |
| A | DE-B-1 296 449 (G. PAOLETTI) * Spalte 2, Zeilen 28-40; Figur 2 * | 9 | RECHERCHIERTE SACHGEBIETE (Int. Cl. 3) A 01 K 47/00 |

Der vorliegende Recherchenbericht wurde für alle Patentansprüche erstellt.

| Recherchenort BERLIN | Abschlußdatum der Recherche 24-05-1983 | Prüfer BERGZOLL M C |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82